# EUROPÄISCHE PATENTSCHRIFT

(11) **EP 3 898 785 B1**
(45) Veröffentlichungstag und Bekanntmachung des Hinweises auf die Patenterteilung: **15.02.2023**
(21) Anmeldenummer: 19832049.1
(22) Anmeldetag: 17.12.2019
(51) Int. Cl.: C08J 5/04, C08J 5/10

(54) **VERFAHREN ZUR HERSTELLUNG EINES PORÖSEN FASERVERBUNDMATERIALS, FASERVERBUNDMATERIAL UND VERWENDUNG EINES FASERVERBUNDMATERIALS**
METHOD FOR PRODUCING A POROUS FIBRE COMPOSITE MATERIAL, FIBRE COMPOSITE MATERIAL AND USE OF A FIBRE COMPOSITE MATERIAL
PROCEDE DE PRODUCTION D'UN MATERIAU COMPOSITE POREUX A BASE DE FIBRES, MATERIAU COMPOSITE A BASE DE FIBRES ET UTILISATION D'UN MATERIAU COMPOSITE A BASE DE FIBRES

(30) Priorität: 19.12.2018 DE 102018132798
(43) Veröffentlichungstag der Anmeldung: 27.10.2021
(73) Patentinhaber: Deutsches Zentrum für Luft- und Raumfahrt e.V., 51147 Köln (DE)
(72) Erfinder: ZUBER, Christian, 71336 Waiblingen (DE); ROTHERMEL, Thomas, 01069 Dresden (DE); ELSÄSSER, Henning, 71083 Herrenberg (DE); REIMER, Thomas, 72667 Schlaitdorf (DE)
(74) Vertreter: Hoeger, Stellrecht & Partner Patentanwälte mbB
(86) Internationale Anmeldenummer: PCT/EP2019/085580
(87) Internationale Veröffentlichungsnummer: WO 2020/127214

(56) Entgegenhaltungen:
- CN-A- 106 478 124
- CN-A- 107 892 582
- WANG CHONGHAI ET AL: "Organic aerogel-impregnated low-density carbon/carbon composites: Preparation, properties and response under simulated atmospheric re-entry conditions", MATERIALS AND DESIGN, Bd. 131, 10. Juni 2017 (2017-06-10), Seiten 177-185, XP085148886, ISSN: 0264-1275, DOI: 10.1016/J.MATDES.2017.06.021

## Beschreibung

Die vorliegende Erfindung betrifft ein Verfahren zur Herstellung eines porösen Faserverbundmaterials.

Die Erfindung betrifft ferner ein Faserverbundmaterial, hergestellt nach einem erfindungsgemäßen Verfahren.

Die Erfindung betrifft ferner die Verwendung eines erfindungsgemäßen Faserverbundmaterials als Thermalschutzmaterial.

Aus der DE 3613990 A1 ist ein Verbundwerkstoff bekannt, welcher durch Verpressen mehrlagiger duroplastischer Prepregs aus mit duroplastischen Harzsystemen imprägnierten Verstärkungsmaterialien hergestellt ist. Es sind ein oder mehrere Epoxidharzprepregs mit einem oder mehreren Novolakprepregs verpresst.

Die DE 1 669 845 A offenbart ein Verfahren zur Herstellung vorgeformter Formmassen aus härtbaren, in Wasser und/oder organischen Lösungsmitteln löslichen Kunstharzen sowie Pull- und/oder Verstärkungsstoffen und sonst üblichen Zusätzen wie Gleitmittel und Farbstoffe. Das Harz wird entweder in Form einer Lösung in einem Lösungsmittel oder in Pulverform unter Zusatz eines Lösungsmittels mit den sonst üblichen Zusätzen, gegebenenfalls auch mit Formaldehyd abspaltenden Verbindungen wie Hexamethylentetramin und mit den Füll- und/oder Verstärkungsstoffen ohne wesentliche Wärmezufuhr intensiv gemischt, wonach so viel Wasser eingearbeitet wird bis das Gemisch formbar geworden ist. Danach wird das Gemisch durch eine geeignete Vorrichtung vorgeformt und dann durch Trocknung auf den gewünschten Fließgrad gebracht.

Aus der US 5,658, 360 A ist ein Verfahren zur Herstellung ungehärteter gegossener Abrasivartikel bekannt, welche einen geringen Anteil flüchtiger organischer Chemikalien aufweisen. Bei der Herstellung wird Wasser als temporäres Bindemittel verwendet.

Die US 2013/0059974 A1 offenbart eine Phenolharzsubstanz, welche ein Phenolharz des Novolak-Typs, ein Phenolharz des Resol-Typs, Hexamethyltetramin, Graphit und faserhaltige Füllmaterialien umfasst.

Der Erfindung liegt die Aufgabe zugrunde, ein Verfahren bereitzustellen, mit welchem ein Faserverbundmaterial hergestellt werden kann, bei dem Faserzwischenräume mit einem Material geringer Dichte gefüllt sind und welches mit einem einfachen Aufbau durchgeführt werden kann.

Diese Aufgabe wird durch ein Verfahren zur Herstellung eines porösen Faserverbundmaterials gelöst, wobei das Verfahren umfasst:
- Bereitstellen eines Fasergebildes, welches mit einem flüssigen Gemisch, umfassend ein Polymerharz, ein organisches Lösungsmittel, insbesondere Isopropanol, und einen Formaldehydbildner, infiltriert ist oder wird;
- Aushärten des flüssigen Gemischs unter Ausbildung eines Faser-Polymerharzmaterials mit Porenstruktur;
- Infiltrieren des Faser-Polymerharzmaterials mit Porenstruktur mit Wasser; und
- Tempern des mit Wasser infiltrierten Faser-Polymerharzmaterials mit Porenstruktur.

Das Polymerharzmaterial mit Porenstruktur weist vorzugsweise eine schwammartige Netzstruktur auf.

Während des Aushärtens des flüssigen Gemischs unter Ausbildung des Faser-Polymerharzmaterials mit Porenstruktur bildet sich vorzugsweise teilweise das poröse Faserverbundmaterial. Während des Temperns des mit Wasser infiltrierten Faser-Polymerharzmaterials mit Porenstruktur wird die Bildung(-sreaktion) des porösen Faserverbundmaterials insbesondere beendet.

"Porös" bedeutet im Sinne der Erfindung, dass das damit charakterisierte Material (nämlich Faser-Polymerharzmaterial mit Porenstruktur und das Faserverbundmaterial) ein Verhältnis von Hohlraumvolumen zu Gesamtvolumen von 20% oder mehr, insbesondere 40% oder mehr, aufweist. Das Gesamtvolumen ist dabei vorzugsweise durch die Summe aus Hohlraumvolumen und Reinvolumen des Feststoffs angegeben. Die Fasern in dem Faser-Polymerharzmaterial mit Porenstruktur und dem porösen Faserverbundmaterial sind insbesondere nicht porös ausgebildet.

Eine Porosität ist gemäß einer bevorzugten Charakterisierungsmethode durch Quecksilber-Porosimetrie bestimmbar. Hierbei dringt eine nicht benetzbare Flüssigkeit, beispielsweise Quecksilber, in Poren eines zu charakterisierenden Materials unter hohem Druck ein. Eine Porengröße der Poren des zu charakterisierenden Materials wird als Funktion eines äußeren Drucks mittels eines Porosimeters bestimmt. Das Porosimeter ist ein Gerät, welches einer Messung einer Luftdurchlässigkeit des zu charakterisierenden Materials dient.

Gemäß einer bevorzugten Ausführungsform liegt die Porosität des aus dem erfindungsgemäßen Verfahren resultierenden porösen Faserverbundmaterials in einem Bereich von ca. 50% bis ca. 60%, besonders bevorzugt in einem Bereich von ca. 54% bis ca. 57%.

Vorzugsweise ist das poröse Faserverbundmaterial offenporös ausgebildet, wobei Hohlräume des Materials mit einer Umgebung in Verbindung stehen.

Vorzugsweise ist das poröse Faserverbundmaterial sowohl mesoporös mit Porengrößen von 2 nm bis 50 nm als auch makroporös mit Porengrößen von größer als 50 nm.

Die Hohlräume in dem porösen Faserverbundmaterial sind vorzugsweise statistisch verteilt und/oder homogen verteilt angeordnet.

Unter "flüssigem Gemisch" ist ein chemisches Gemisch von zumindest dem Polymerharz, dem organischen Lösungsmittel und dem Formaldehydbildner zu verstehen. Dabei ist zumindest so viel organisches Lösungsmittel enthalten, dass das flüssige Gemisch fließfähig ist.

Insbesondere ist das flüssige Gemisch homogen und liegt als Lösung des Polymerharzes und des Formaldehydbildners in dem organischen Lösungsmittel vor. Es kann aber - je nach Polymerharz und Mengenverhältnissen - auch vorgesehen sein, dass das flüssige Gemisch eine Dispersion ist, wobei zumindest ein Teil des Polymerharzes und/oder des Formaldehydbildners feinverteilt in dem organischen Lösungsmittel schweben.

Bei dem Aushärten des flüssigen Gemischs wird das mit dem flüssigen Gemisch infiltrierte Fasergebilde vorzugsweise mit erwärmt. Es findet insbesondere eine chemische Vernetzungsreaktion, beispielsweise eine Polymerisationsreaktion, statt. Die Fasern des Fasergebildes nehmen vorzugsweise nicht an der Reaktion teil. Insbesondere findet eine Polykondensationsreaktion statt.

"Tempern" ist im Sinne der Erfindung eine Wärmebeaufschlagung des zu tempernden Materials, wobei optional extern ein erhöhter Druck an das zu tempernde Material angelegt werden kann oder sich aufgrund einer Durchführung des Temperns in einem druckfest verschlossenen Behälter ein Dampfdruck aufbaut. Bei einer Temperaturerhöhung oder Wärmebeaufschlagung wird vorzugsweise von Raumtemperatur (20°C) als Ausgangstemperatur ausgegangen.

Ein Verpressen, bei welchem Fasern beschädigt werden können, ist vorzugsweise entbehrlich.

Bevorzugt lässt sich das Tempern gemäß einer der folgenden Varianten durchführen:
- Positionieren des mit Wasser infiltrierten Faser-Polymerharzmaterials mit Porenstruktur in einem Behälter, druckfestes Verschließen des Behälters und anschließendes Erwärmen des Behälters und des darin befindlichen mit Wasser infiltrierten Faser-Polymerharzmaterials, wodurch insbesondere ein Dampfdruck entsteht, welcher ein Sieden des Wassers im Wesentlichen verhindert; oder
- Positionieren des mit Wasser infiltrierten Faser-Polymerharzmaterials mit Porenstruktur in einem Behälter, Verschließen des Behälters - insbesondere mit einer fluiddichten Membran - Positionieren des verschlossenen Behälters in einem Autoklav und Anlegen eines Drucks, wobei durch Anlegen des Drucks insbesondere ein Sieden des Wassers im Wesentlichen verhindert wird.

Es kann zudem vorgesehen sein, dass das mit Wasser infiltrierte Faser-Polymerharzmaterials mit Porenstruktur in dem druckfest verschlossenen Behälter (gemäß der erstgenannten Variante) durch einen Autoklav extern mit Druck beaufschlagt wird.

Insbesondere unterbindet das Wasser die Vernetzungsreaktion nicht, sondern gewährleistet aufgrund seiner Wärmekapazität einen kontrollierten Ablauf derselben.

Die fluiddichte Membran verhindert eine Volumenreduzierung des mit Wasser infiltrierten Faser-Polymerharzmaterials mit Porenstruktur aufgrund von Verdampfen.

Das organische Lösungsmittel nimmt vorzugsweise nicht an chemischen Reaktionen während des Aushärtens teil. Das organische Lösungsmittel beeinflusst die chemische Reaktion jedoch dahingehend, dass es eine vollständige Vernetzung des Polymerharzes während des Aushärtens des flüssigen Gemischs verhindert.

Der Formaldehydbildner reagiert unter geeigneten Reaktionsbedingungen, vorzugsweise Erhitzen, zu Formaldehyd.

Durch das Verwenden von organischem Lösungsmittel in dem flüssigen Gemisch wird ein Anteil an reagierenden Substanzen reduziert und während des Aushärtens entsteht ein Material mit verminderter Dichte im Vergleich zu einem Aushärtevorgang ohne oder mit wenig Lösungsmittel. Hierdurch kann bei dem Aushärten ein Faser-Polymerharzmaterial mit Porenstruktur gebildet werden, welches ebenfalls eine im Vergleich zu einem Vollmaterial verringerte Dichte aufweist.

Im Sinne der Erfindung ist das poröse Faserverbundmaterial ein Fasermaterial, wobei in den zwischen den Fasern ausgebildeten Zwischenräumen eine netzartige Struktur, umfassend zusammenhängende Partikeln unterschiedlicher Größe aus chemisch vernetztem Polymerharz, vorliegen. Die Partikel weisen vorzugsweise auf Mikrometerebene eine unregelmäßige Form auf.

Dadurch, dass das Faser-Polymerharzmaterial mit Porenstruktur vor dem Tempern mit Wasser infiltriert wird, wird während des Temperns freigesetzte Energie, insbesondere Vernetzungsenergie, in Form von Wärme von dem Wasser aufgenommen. Hierbei werden insbesondere die hohe Wärmekapazität des Wassers genutzt. Darüber hinaus behindert Wasser im Vergleich zu anderen Lösungsmitteln eine chemische Vernetzungsreaktion des Polymerharzes, welche während des Temperns eintritt, nicht. Vernetzungsenergie kann bei exothermen Vernetzungsreaktionen entstehen.

Das Fasergebilde kann in Form eines Filzes, insbesondere eines Kohlenstofffilzes, in Form von keramischen Filzlagen, oder als Vlies bereitgestellt werden. Insbesondere wird ein textiles Fasergebilde, beispielsweise in Form eines Geflechts, eines Gestrickes oder eines Gewebes, bereitgestellt.

Die Fasern des Fasergebildes sind vorzugsweise Kohlenstofffasern. Alternativ können auch eine der folgenden Fasern oder Mischungen daraus oder Mischungen daraus mit Kohlenstofffasern verwendet werden: Polymerfasern, Glasfasern, keramische Fasern, Naturfasern.

Die Fasern können als Langfasern oder Kurzfasern verwendet werden.

Bevorzugte Polymerfasern sind Phenolharzfasern.

Beispielsweise wird ein Fasergebilde in Form einer oder mehrerer Schichten, welche beispielsweise durch ein Nassvliesverfahren hergestellt sind, bereitgestellt.

Günstig kann es sein, wenn das Fasergebilde eine Mischung aus Kurzfasern und zerkleinerten Fasern, beispielsweise zu einem oder mehreren Nassvliesen verarbeitet, umfasst oder daraus gebildet ist.

Die zerkleinerten Fasern sind vorzugsweise gemahlene Fasern.

Die Kurzfasern weisen vorzugsweise eine durchschnittliche Länge von ca. 6 mm bis ca. 10 mm auf.

Eine durchschnittliche Länge der zerkleinerten Fasern liegt vorzugsweise in einem Bereich von ca. 0,25 mm bis ca. 0,35 mm, beispielsweise bei ca. 0,3 mm.

Günstig kann es sein, wenn das Fasergebilde Phenolharzfasern und ein Bindemittel umfassen oder daraus gebildet ist.

Ein bevorzugtes Bindemittel sind Polyvinylalkoholfasern.

Die Phenolharzfasern sind vorzugsweise vernetzte Phenol-Aldehydfasern, welche insbesondere durch eine Säure-katalysierte Vernetzung von schmelzgesponnenem Novolak-Harz hergestellt sind.

Vorzugsweise weisen die Phenolharzfasern eine vollvernetzte dreidimensionale amorphe Struktur auf.

Vorteilhaft kann es sein, wenn die Phenolharzfasern aus ca. 76 Gew.-% Kohlenstoff, ca. 18 Gew.-% Sauerstoff und ca. 6 Gew.-% Wasserstoff bestehen.

Als besonderes günstig haben sich Phenolharzfasern erwiesen, welche unter der Produktbezeichnung "Kynol^{®} Novoloid Fasern" von dem Unternehmen Kynol Europa GmbH erhältlich sind.

Ein poröses Faserverbundmaterial, dessen Fasern Kohlenstofffasern sind, ist vorzugsweise temperaturstabil bis zu 300°C.

In Ausführungsformen, in welchen das Fasergebilde Phenolharzfasern umfasst oder daraus gebildet ist, weist das resultierende Faserverbundmaterial vorzugsweise eine um einen Faktor 5 oder mehr, insbesondere eine um einen Faktor 6 oder mehr, verringerte Wärmeleitfähigkeit auf im Vergleich zu einem Faserverbundmaterial, bei welchem anstelle der Phenolharzfasern Kohlenstofffasern verwendet wurden.

Die Dickenrichtung ist vorzugsweise senkrecht zu einer äußeren Oberfläche des Faserverbundmaterials definiert.

Beispielsweise liegt eine Wärmeleitfähigkeit des Faserverbundmaterials mit Phenolharzfasern in Dickenrichtung bei 0,0423 W/(m·K).

Eine Wärmeleitfähigkeit des Faserverbundmaterials mit Kohlenstofffasern in Dickenrichtung liegt vorzugsweise bei 0,256 W/(m·K).

Bei einer Hitzeeinwirkung, beispielsweise von Temperaturen, wie sie bei einem Widereintritt in die Erdatmosphäre herrschen, pyrolysieren die Phenolharzfasern vorzugsweise zu Kohlenstofffasern und/oder werden zu Kohlenstofffasern umgesetzt. So kann die Thermalschutzwirkung optimiert werden, insbesondere da es bereits bei der Umsetzung der Phenolharzfasern zu Kohlenstofffasern zu einer Energieumsetzung kommt.

Die Pyrolyse der Phenolharzfasern läuft vorzugsweise bei Temperaturen von ca. 400°C bis ca. 3000°C statt.

Die Umsetzung der Phenolharzfasern zu Kohlenstofffasern ist vorzugsweise eine endotherme Zersetzung.

Die aus der Umsetzung der Phenolharzfasern resultierenden Kohlenstofffasern sind beispielsweise poröse Kohlenstofffasern.

Das resultierende Faserverbundmaterial ist insbesondere vergleichbar mit einem Faserverbundmaterial, welches unter Verwendung eines Fasergebildes aus Kohlenstofffasern hergestellt wurde.

Ein Char-Layer, welcher beispielsweise bei einer Wärmestromdichte von ca. 3 MW/m² in einem Plasmawindkanal auf einer Oberfläche des Faserverbundmaterials ausgebildet wird, ist vorzugsweise vergleichsweise dünn.

Ein Verhältnis einer Dicke des Faserverbundmaterials insgesamt (virgin Material) und einer Dicke des Char-Layers liegt vorzugsweise bei 4:1 oder mehr, insbesondere bei 4,5:1 oder mehr.

Insbesondere liegt das Verhältnis der Dicke des Faserverbundmaterials insgesamt (virgin Material) und der Dicke des Char-Layers bei 5:1 oder weniger, insbesondere bei 4,6:1 oder weniger.

Das poröse Faserverbundmaterial in nicht pyrolysiertem Zustand bis zu 300°C und/oder in pyrolysiertem Zustand ist insbesondere mittels mechanischer Methoden bearbeitbar. Mechanische Methoden sind beispielsweise Sägen, Schneiden, Drehen und/oder Bohren.

Vorzugsweise wird ein Fasergebilde, wie es herkömmlicherweise zur Herstellung von Faserverbundmaterialien verwendet wird, eingesetzt.

Es können insbesondere auch Materialien in Form eines Fasergebildes eingesetzt werden, welche herkömmlicherweise als Isolationsmaterial für Hochtemperatur-Öfen eingesetzt werden oder in anderen Hochtemperatur-Anwendungen. Auch Kurzfasern-umfassende Fasergebilde können bevorzugt verwendet werden.

Gemäß einer bevorzugten Ausführungsform des Verfahrens wird ein Fasergebilde bereitgestellt und dieses wird mit dem flüssigen Gemisch, umfassend ein Polymerharz, ein organisches Lösungsmittel und einen Formaldehydbildner, infiltriert.

Alternativ können auch vorimprägnierte Fasergebilde, sogenannte "Prepregs", verwendet werden. Diese vorimprägnierten Fasergebilde sind bereits mit einem Polymerharz imprägniert. Bei der Verwendung von vorimprägnierten Fasern kann es ausreichend sein, wenn zu diesen vorimprägnierten Fasern ein organisches Lösungsmittel und der Formaldehydbildner hinzugegeben werden. Insbesondere wird dann das Polymerharz zumindest teilweise in dem organischen Lösungsmittel, beispielsweise in Isopropanol, gelöst.

Eine Dichte des porösen Faserverbundmaterials liegt vorzugsweise in einem Bereich von ca. 0,35 g/cm³ bis ca. 0,45 g/cm³, insbesondere bei ca. 0,4 g/cm³. Vorzugsweise weist das poröse Faserverbundmaterial in Faserzwischenräumen eine aerogel-artige Struktur auf.

Durch das Infiltrieren des Faser-Polymerharzmaterials mit Porenstruktur mit Wasser vor dem Tempern kann ein wesentlicher Temperaturanstieg innerhalb des entstehenden porösen Faserverbundmaterials, welcher Materialschäden in dem porösen Faserverbundmaterial zur Folge haben könnte, während des Temperns vermieden werden.

Das poröse Faserverbundmaterial eignet sich vorzugsweise als flammenhemmende Struktur, beispielsweise als Thermalschutzmaterial für einen Wiedereintritt von Flugkörpern in die Erdatmosphäre. Hierzu können beispielsweise Blöcke aus dem porösen Faserverbundmaterial auf einen zu schützenden Bereich aufgeklebt werden.

Hierbei ist von Bedeutung, dass das Polymerharz und das daraus resultierende chemisch vernetzte Material eine niedrige Wärmeleitfähigkeit aufweist.

Aufgrund der Porenstruktur, welche insbesondere ab einer Entstehung in dem Faser-Polymerharzmaterial mit Porenstruktur erhalten bleibt, des Faserverbundmaterials mit geringer Dichte, wird auch bei hohen Temperaturen, wie beispielsweise von über 3000°C, beispielsweise von über 10.000°C, bei dem Widereintritt in die Erdatmosphäre, zunächst die Oberfläche eines Bauteils aus dem porösen Faserverbundmaterial erwärmt, bevor weiter innenliegende Bereiche erwärmt werden. Es findet eine Pyrolyse statt. Das poröse Faserverbundmaterial in pyrolysiertem Zustand oder Pyrolyse-Zustand kann dann schmelzen, sublimieren oder oxidieren.

Kohlenstoffatome des porösen Faserverbundmaterials in pyrolysiertem Zustand können in eine Grenzschicht zwischen einer Ablatoroberfläche und einer Stoßfront emittiert werden und an der Grenzfläche einen radiativen Energieeintrag in das Thermalschutzmaterial reduzieren.

Alternativ kann das poröse Faserverbundmaterial auch als sonstiges Brandschutzmaterial verwendet werden.

Aufgrund seiner geringen Wärmeleitfähigkeit, eignet es sich auch ganz allgemein als Isolationsmaterial.

Bei der Aushärtung des flüssigen Gemischs unter Ausbildung eines Faser-Polymerharzmaterials mit Porenstruktur wird das Polymerharz vorzugsweise zunächst unvollständig vernetzt. Das Faser-Polymerharzmaterial mit Porenstruktur weist insbesondere - trotz einer unvollständigen chemischen Vernetzungsreaktion - eine ausreichende mechanische Festigkeit auf, damit es im weiteren Verfahren handhabbar ist.

Die chemische Vernetzungsreaktion ist vorzugsweise eine Polymerisationsreaktion, insbesondere eine Polykondensation.

Das Faserverbundmaterial kann für bestimmte Anwendungen auch als ein Kernmaterial für eine Sandwichstruktur verwendet werden. Die Sandwichstruktur umfasst vorzugsweise ein erstes Lagenelement, ein zweites Lagenelement und ein dazwischen angeordnetes Kernelement aus dem Kernmaterial.

Vorzugsweise umfasst der Formaldehydbildner Urotropin oder ist Urotropin. Urotropin - auch als Hexamethylentetramin bezeichnet - als Formaldehydbildner ist im Vergleich zu den meisten verfügbaren alternativen Formaldehydbildnern und/oder Formaldehyd weniger gefährlich für menschliche und/oder tierische Organismen und lässt sich somit besser handhaben.

Das Aushärten wird vorzugsweise durch Erwärmen des flüssigen Gemischs in einem druckfest verschlossenen Gesenk und/oder Erwärmen des flüssigen Gemischs unter externer Beaufschlagung des flüssigen Gemischs mit Druck, insbesondere in einem Autoklav, durchgeführt.

In Ausführungsformen, in welchen das Aushärten in einem druckfest verschlossenen Gesenk durchgeführt wird, wird das flüssige Gemisch in dem druckfest verschlossenen Gesenk vorzugsweise in einem Ofen erwärmt.

Während des Aushärtens des flüssigen Gemischs unter Bildung des Faser-Polymerharzmaterials mit Porenstruktur verbleibt entstehender Dampf in dem Gesenk. Hierdurch baut sich ein Dampfdruck auf. Der Dampfdruck verhindert ein Sieden und/oder übermäßiges Verdampfen des Polymerharzes, des organischen Lösungsmittels und insbesondere des Formaldehydbildners.

Zur Vermeidung eines Berstens des druckfest verschlossenen Gesenks aufgrund eines entstehenden Innendrucks sind Wandungen des druckfest verschlossene Gesenk vorzugsweise massiv ausgebildet.

Alternativ zum Erwärmen des druckfest verschlossenen Gesenks ohne weitere externe Druckbeaufschlagung kann vorgesehen sein, dass das flüssige Gemisch in dem druckfest verschlossenen Gesenk in einem Autoklav extern mit Druck beaufschlagt wird.

In Ausführungsformen, in welchen das Aushärten in einem Autoklav durchgeführt wird, wird ein Behälter, insbesondere mit einer fluiddichten und/oder flexiblen Membran, verschlossen und das flüssige Gemisch in dem Autoklav mit Druck beaufschlagt. Durch die Druckbeaufschlagung wird vorzugsweise ein Sieden des Polymerharzes und des organischen Lösungsmittels - und insbesondere des Formaldehydbildners - verhindert. Ein Verdampfen des organischen Lösungsmittels oder anderer Bestandteile des flüssigen Gemischs wird insbesondere zusätzlich durch die fluiddichte und/oder flexible Membran verhindert.

Das Verfahren bietet den Vorteil, dass eine Größe oder Form des porösen Faserverbundmaterials nur durch die Größe des Gesenks oder Autoklav vorgegeben ist und Größe und Form ansonsten frei skalierbar bzw. wählbar ist.

Das Aushärten wird vorzugsweise bei einer Temperatur von ca. 120°C bis ca. 160°C, insbesondere bei einer Temperatur von ca. 140°C bis ca. 150°C, beispielsweise bei einer Temperatur von ca. 145°C, durchgeführt. Als Reaktionszeiten haben sich 4 h oder mehr als besonders geeignet für die Aushärtung erwiesen, wobei die Reaktionszeiten - je nach Größe und Form des Fasergebildes - variieren können. Bei den genannten Temperaturen läuft vorzugsweise zumindest teilweise eine chemische Vernetzung kontrolliert ab.

Hierbei entsteht vorzugsweise ein dreidimensionales Netzwerk, die Vernetzung ist jedoch noch nicht vollständig abgeschlossen.

Durch die Verwendung des organischen Lösungsmittels kann das Aushärten jedoch auch bei einer Temperatur von ca. 225°C durchgeführt werden, ohne dass eine vollständige Vernetzung stattfindet.

Trotz des organischen Lösungsmittels findet eine Aushärtereaktion des Polymerharzes statt.

Die erwähnten 4 h haben sich beispielsweise für ein Fasergebilde mit Abmessungen von 170 mm x 170 mm x 50 mm als besonders geeignete Aushärtezeit des flüssigen Gemischs erwiesen.

Bei einem Aushärten in einem Autoklav wird das Aushärten vorzugsweise unter einem Druck von ca. 10 bar bis ca. 20 bar, vorzugsweise ca. 15 bar, durchgeführt. Durch den erhöhten Druck wird sichergestellt, dass kein organisches Lösungsmittel entweichen kann. Der erhöhte Druck bietet darüber hinaus den Vorteil, dass eine Geschwindigkeitskonstante der chemischen Vernetzungsreaktion größer ist als bei Raumdruck. Die Vernetzung läuft daher schneller, insbesondere um einen Faktor von ca. 4 oder mehr schneller, ab als bei einem Aushärten unter Raumdruck.

Vorzugsweise wird das Aushärten in einem geschlossenen, druckfesten Gesenk durchgeführt. Es findet vorzugsweise eine Beaufschlagung mit mechanischem Druck von außen statt. Insbesondere entsteht durch den Dampfdruck des organischen Lösungsmittels eine schnellere Vernetzung.

Es ist vorzugsweise eine Membran ausgebildet, welche ein Entweichen des organischen Lösungsmittels minimiert oder verhindert.

Ein Druck, beispielsweise in einem Autoklav, verhindert ein Sieden des organischen Lösungsmittels.

Ein Anteil an Formaldehydbildner liegt vorzugsweise in einem Bereich von ca. 0,4 Gew.-% bis ca. 10,0 Gew.-%, vorzugsweise ca. 0,5 Gew.-% bis ca. 1,5 Gew.-%, insbesondere von ca. 0,8 Gew.-% bis ca. 1,2 Gew.-%, bezogen auf eine Masse des eingesetzten Polymerharzes.

Vorteilhaft kann es sein, wenn das Polymerharz und das organische Lösungsmittel in dem flüssigen Gemisch, insbesondere vor Zugabe des Formaldehydbildners, in einem Verhältnis von Masse des Polymerharzes zu Masse des organischen Lösungsmittels von ca. 2 zu 3 bis ca. 3 zu 2 vorliegen.

Beispielsweise werden das Polymerharz und das organische Lösungsmittel in einem Massenverhältnis von ca. 1 zu 1 gemischt.

Bei derartigen Verhältnissen von Polymerharz und organischem Lösungsmittel ist ein Anteil des Polymerharzes ausreichend, damit eine chemische Vernetzungsreaktion während des Aushärtens ablaufen kann. Der Anteil des Lösungsmittels ist vorzugsweise hoch genug, damit eine Struktur mit geringerer Dichte im Vergleich zu ausgehärtetem unverdünntem Polymerharz entsteht. Bei einem hohem Verdünnungsgrad kommt es insbesondere aufgrund des Formaldehydbildners zu einer Vernetzungsreaktion des Polymerharzes.

Das Polymerharz ist vorzugsweise ein Phenolharz oder ein Epoxidharz. Ein Phenolharz bietet den Vorteil, dass bei einer Pyrolyse Restkohle entsteht und/oder es sich als Abbrennmaterial besonders eignet.

Vorzugsweise wird das organische Lösungsmittel vor dem Infiltrieren des Faser-Polymerharzmaterials mit Porenstruktur mit Wasser entfernt. Insbesondere wird das organische Lösungsmittel mittels Erwärmens des Faser-Polymerharzmaterials mit Porenstruktur, insbesondere bei einer Temperatur, die in einem Bereich von 95 % bis 105 % des Siedepunkts des organischen Lösungsmittels liegt, entfernt.

Bei der Verwendung von Isopropanol wird das Isopropanol beispielsweise bei ca. 80°C, entfernt. Hierzu wird vorzugsweise das Faser-Polymerharzmaterial mit Porenstruktur, welches noch Isopropanol enthält, bei ca. 80°C bis zur Einstellung einer konstanten Masse in einem Temperofen gelagert.

Günstig kann es sein, wenn das Infiltrieren des Faser-Polymerharzmaterials mit Porenstruktur mit Wasser unter Vakuumbeaufschlagung, vorzugsweise unter Anlegung eines Unterdrucks von ca. 2 mbar bis ca. 200 mbar, insbesondere von ca. 2 mbar bis ca. 10 mbar, beispielsweise ca. 5 mbar, an einen den Faser-Polymerharzmaterial mit Porenstruktur enthaltenen Behälter, durchgeführt wird.

Vorzugsweise läuft während des Temperns eine Reaktion zur Bildung eines porösen Netzwerks vollständig oder bis zu einem Reaktionsabbruch ab, wobei Strukturen des porösen Netzwerkes einen mittleren Durchmesser von ca. 500 nm oder weniger, vorzugsweise ca. 300 nm oder weniger, insbesondere ca. 150 nm oder weniger, aufweisen. Die Reaktion zur Bildung des porösen Netzwerks, insbesondere eine Polymerisationsreaktion, beginnt während des Aushärtens des flüssigen Gemischs.

Strukturen des porösen Netzwerks bilden sich vorzugsweise bei ca. 145°C aus.

Der mittlere Durchmesser ist dabei vorzugsweise als arithmetisches Mittel angegeben. Es kann aber auch vorgesehen sein, dass der mittlere Durchmesser auf den Median der Durchmesserverteilung bezogen ist. Der Durchmesser bezeichnet insbesondere eine kürzeste Verbindung von zwei Oberflächen.

Nach dem Tempern wird vorzugsweise das Wasser mittels Erwärmen in einem Bereich von ca. 80°C bis ca. 100°C, vorzugsweise ca. 90°C, abgedampft. Hierzu wird das Material beispielsweise bei ca. 5 mbar in einem Exsikkator oder in einem anderen mit Vakuum beaufschlagten Behälter gelagert. Alternativ ist das Wasser beispielsweise auch bei Normaldruck in einem Ofen abdampfbar.

Die Erfindung betrifft ferner ein Faserverbundmaterial, hergestellt nach einem erfindungsgemäßen Verfahren.

Die im Zusammenhang mit dem erfindungsgemäßen Verfahren genannten Merkmale und/oder Vorteile gelten für das erfindungsgemäße Faserverbundmaterial gleichermaßen.

Vorteilhaft kann es sein, wenn das Faserverbundmaterial Phenolharzfasern umfasst, welche insbesondere bei Hitzeeinwirkung unter Erhalt einer Faserstruktur zu Kohlenstofffasern umsetzbar sind und/oder umgesetzt werden.

Beispielsweise pyrolysieren die Phenolharzfasern bei Temperaturen in einem Bereich von ca. 400°C bis ca. 3000°C (Hitzeeinwirkung).

Unter Hitzeeinwirkung ist vorzugsweise zu verstehen, dass das Faserverbundmaterial Temperaturen von 400°C oder mehr, insbesondere von ca. 900°C oder mehr, beispielsweise von ca. 1500°C oder mehr, ausgesetzt ist, beispielsweise unter Inergasatmosphäre.

Eine Inertgasatmosphäre dient einer Simulation von Bedingungen, welche bei einem Wiedereintritt in die Erdatmosphäre vorliegen.

Hohen Temperaturen ist das Faserverbundmaterial insbesondere als Thermalschutzmaterial bei einem Wiedereintritt in die Erdatmosphäre ausgesetzt.

Die Erfindung betrifft ferner die Verwendung eines erfindungsgemäßen Faserverbundmaterials als Thermalschutzmaterial.

Die im Zusammenhang mit dem erfindungsgemäßen Verfahren genannten Merkmale und/oder Vorteile gelten für die erfindungsgemäße Verwendung gleichermaßen.

Weitere bevorzugte Merkmale und/oder Vorteile der Erfindung sind Gegenstand der nachfolgenden Beschreibung der zeichnerischen Darstellung von Ausführungsbeispielen.

Es zeigen:
- Fig. 1: ein Ablaufdiagramm eines Verfahrens zur Herstellung eines porösen Faserverbundmaterials;
- Fig. 2: eine schematische Darstellung eines Gesenks zum Aushärten eines mit einem flüssigen Gemisch infiltrierten Fasergebildes zur Verwendung in dem in Fig. 1 beschriebenen Verfahren;
- Fig. 3: eine schematische Darstellung eines Autoklavs zum Aushärten eines mit einem flüssigen Gemisch infiltrierten Fasergebildes zur Verwendung in dem in Fig. 1 beschriebenen Verfahren;
- Fig. 4: eine Elektronenmikroskopieaufnahme eines porösen Faserverbundmaterials, hergestellt mit dem Verfahren aus Fig. 1;
- Fig. 5: eine weitere Elektronenmikroskopieaufnahme eines porösen Faserverbundmaterials, hergestellt mit dem Verfahren aus Fig. 1; und
- Fig. 6: eine weitere Elektronenmikroskopieaufnahme eines porösen Faserverbundmaterials, hergestellt mit dem Verfahren aus Fig. 1.

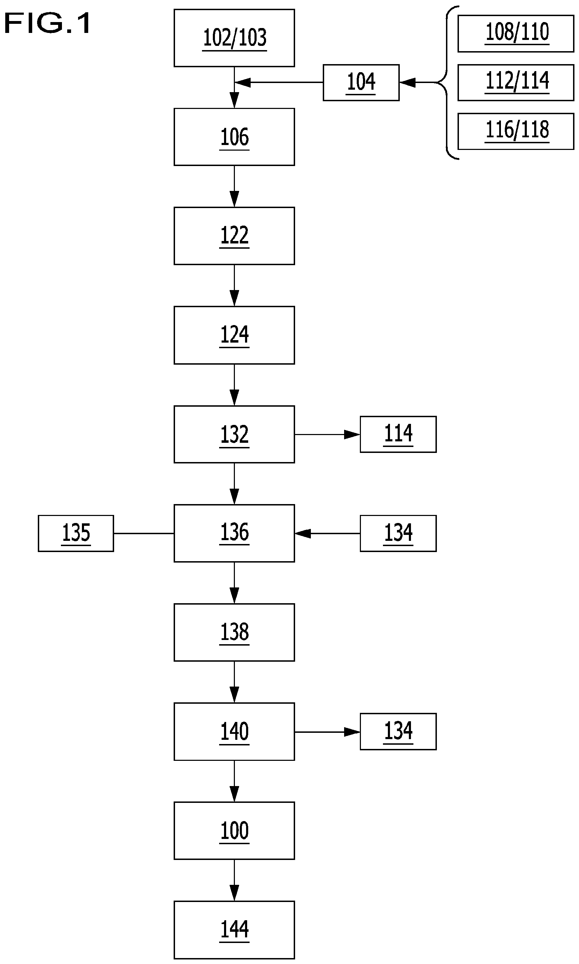

Ein Ablaufdiagramm eines Verfahrens zur Herstellung eines porösen Faserverbundmaterials 100 ist in Fig. 1 schematisch dargestellt.

Zunächst wird ein Fasergebilde 102 bereitgestellt. Hierzu wird vorliegend ein Kohlenstofffasergebilde 103, umfassend Kohlenstofffasern, welche ein Filz oder ein Vlies oder ein sonstiges textiles Gewebe bilden, verwendet. Es können alternativ auch andere Formen eines textilen Fasergebildes 102 verwendet werden. Beispielsweise ist das Fasergebilde 102 ein Geflecht, ein Gewebe, ein Gestricke oder ein Gewebe.

Alternativ kann auch ein Fasergebilde 102 aus Glasfasern, Polymerfasern, keramischen Fasern, Naturfasern oder Mischungen daraus oder Mischungen aus einer oder mehreren der genannten Fasern mit Kohlenstofffasern bereitgestellt werden.

Bevorzugte Polymerfasern sind Phenolharzfasern.

Vorzugsweise basieren die Phenolharzfasern auf Novolak (Basis Phenolharz), welches schmelzgesponnen und dann durch eine Säure-katalysierte Vernetzung ausgehärtet wird.

Eine bevorzugte chemische Zusammensetzung der Phenolharzfasern ist: ca. 76 Gew.-% Kohlenstoff, ca. 18 Gew.-% Sauerstoff und ca. 6 Gew.-% Wasserstoff.

Als besonderes geeignet haben sich Phenolharzfasern mit der Produktbezeichnung "Kynol^{®} Novoloid Fasern" des Unternehmens Kynol Europa GmbH erwiesen.

Vorzugsweise ist das Fasergebilde 102 mittels eines Nassvliesverfahrens hergestellt.

Beispielsweise werden Nassvliese aus einer Mischung aus Phenolharz-Kurzfasern, insbesondere mit einer durchschnittlichen Länge in einem Bereich von ca. 6 mm und ca. 10 mm, und gemahlenen Phenolharzfasern mit einer durchschnittlichen Länge von ca. 0,3 mm sowie Polyvinylalkoholfasern als Bindemittel hergestellt.

Das Bindemittel schmilzt während eines Trocknungsvorgangs zur Herstellung des Fasergebildes 102.

Das Fasergebilde 102 wird mit einem flüssigen Gemisch 104 infiltriert (Infiltrieren 106).

Das Gemisch 104 umfasst ein Polymerharz 108 in Form eines Phenolharzes 110, ein organisches Lösungsmittel 112 in Form von Isopropanol 114 und einen Formaldehydbildner 116 in Form von Urotropin 118.

Das organische Lösungsmittel 112 dient einer Verdünnung des Polymerharzes 108.

Isopropanol 114 bietet den Vorteil, dass das Phenolharz 110 und Urotropin 118 gut darin löslich sind und es aufgrund seines vergleichsweise geringen Siedepunkts von 82,6°C und hohen Dampfdrucks von 42,6 hPa bei 20°C leicht abdampfbar ist. Das Abdampfen wird später noch genauer ausgeführt.

Das flüssige Gemisch 104 wird vor dem Infiltrieren 106 hergestellt.

Hierzu werden Phenolharz 110 und Isopropanol 114 in einem Massenverhältnis von 1:1 gemischt. Zu diesem Gemisch werden, bezogen auf eine Masse des eingesetzten Phenolharzes 110, ca. 1 Gew.-% Urotropin 118 zugegeben. Das Urotropin 118 wird vor der Zugabe gemahlen, wodurch eine schnellere Lösung des Urotropins 118 in dem Isopropanol 114 erreicht werden kann.

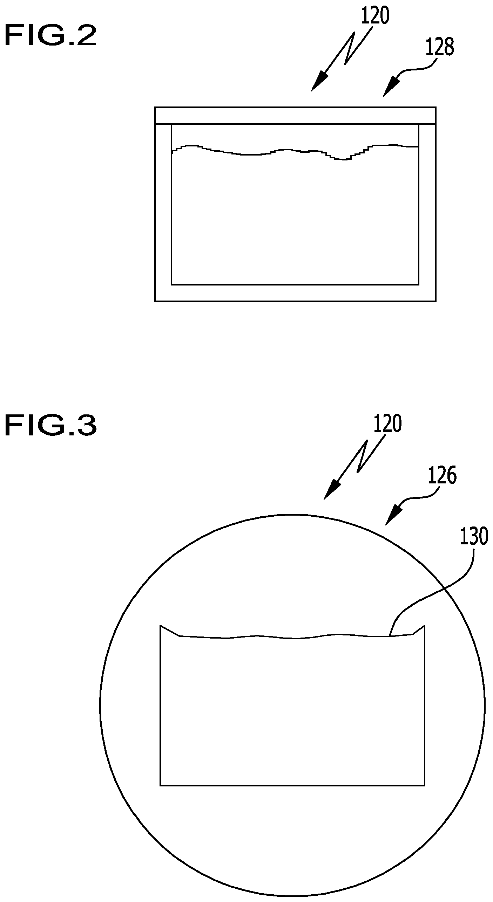

Zum Infiltrieren 106 wird das Fasergebilde 102 in einem Behälter 120 (vgl. Fig. 2 und 3) bei einem reduzierten Druck von ca. 200 mbar mit dem Gemisch 104 infiltriert. Bei einem Fasergebilde 102 von Abmessungen von 300 mm x 300 mm x 50 mm beträgt eine Infiltrationszeit beispielsweise ca. 2 h. Nach dem Infiltrieren 106 wird der Behälter 120 verschlossen.

Im Anschluss an das Infiltrieren 106 wird das flüssige Gemisch 104 unter Ausbildung eines Faser-Polymerharzmaterials mit Porenstruktur 124 ausgehärtet (Aushärten 122). Das Aushärten 122 wird in einem Autoklav 126 (vgl. Fig. 3) oder in einem druckfest verschlossenen Gesenk 128 (Fig. 2) durchgeführt. Es kann aber auch vorgesehen sein, dass das flüssige Gemisch 102 in dem druckfest verschlossenen Gesenk 128 in einem Autoklav 126 extern mit Druck beaufschlagt wird.

Die im Zusammenhang des Verfahrens angegebenen Zeiten können je nach Größe und Form des Fasergebildes 102 variieren.

Bei einem Aushärten 122 in dem druckfest verschlossenen Gesenk 128 (vgl. Fig. 2) wird das Gesenk 128 für ca. 16 h oder mehr bei ca. 145°C in einem Temperofen geheizt. Nach einer vollständigen Auskühlung des Gesenks 128 wird das darin entstandene Faser-Polymerharzmaterial 124 entformt.

Durch die druckfeste und insbesondere auch fluiddichte Ausbildung des druckfest verschlossenen Gesenks 128 kann entstehender Dampf nicht aus dem druckfest verschlossenen Gesenk 128 entweichen und es baut sich ein Dampfdruck auf. Der Dampfdruck minimiert ein Sieden des Polymerharzes 110 und des organischen Lösungsmittels 112. Ein Volumen des organischen Lösungsmittels 112 wird im Wesentlichen konstant gehalten.

Das druckfest verschlossene Gesenk 128 ist vorliegend massiv ausgebildet, um einem während des Aushärtens 122 des flüssigen Gemischs 104 entstehenden Innendruck in dem druckfest verschlossenen Gesenk 128 standhalten zu können ohne zu bersten.

Bei einem Aushärten 122 in einem Autoklav 126 (vgl. Fig. 3) wird ein abgedichteter Behälter 120 in einen Autoklav 126 eingebracht, wobei vorliegend eine Membran 130 zur fluiddichten Abdichtung des mit dem flüssigen Gemisch 104 infiltrierten Fasergebildes 102 verwendet wird. Dies verhindert ein Verdampfen des organischen Lösungsmittels 112 während des Aushärtens 122 des flüssigen Gemischs 104.

In einem Autoklav-Verfahren wird in dem Autoklav 126 ein Druck von ca. 15 bar aufgebaut und anschließend, insbesondere bei maximaler Heizrate (innerhalb von ca. 30 min), auf eine Temperatur von ca. 145°C aufgeheizt. Die eingestellte Temperatur und der eingestellte Druck werden für eine Aushärtezeit, beispielsweise für ca. 4 h oder mehr, konstant gehalten.

Anschließend wird der Autoklav 126 auf ca. 25°C abgekühlt. Bis zur vollständigen Auskühlung auf Raumtemperatur (ca. 20°C) wird der Druck im Autoklav 126 bei ca. 15 bar gehalten. Nach Abkühlen auf Raumtemperatur wird der Druck von ca. 15 bar aufgehoben und das entstandene Faser-Polymerharzmaterial mit Porenstruktur 124 entformt.

Nach Entstehung des Faser-Polymerharzmaterials mit Porenstruktur 124 während des Aushärtens 122 wird das Isopropanol 114 entfernt (Entfernen 132).

Hierzu wird das enthaltende Faser-Polymerharzmaterial mit Porenstruktur 124, welches nach dem Aushärten 122 immer noch Isopropanol 114 enthält, in einem Temperofen bei ca. 80°C gelagert, bis sich eine konstante Masse eingestellt hat und/oder das Isopropanol 114 vollständig abgedampft wurde.

Anschließend wird das Faser-Polymerharzmaterial mit Porenstruktur 124 mit Wasser 134 infiltriert (Infiltrieren 136). Hierzu wird das Faser-Polymerharzmaterial mit Porenstruktur 124 für beispielsweise ca. 60 min oder mehr bei ca. 5 mbar in einem Behälter, vorliegend einem Exsikkator 135, gelagert.

Der Exsikkator 135 wird zum Infiltrieren (136) mit Wasser geflutet. Das Faser-Polymerharzmaterial mit Porenstruktur 124 wird für ca. 100 min oder mehr unter Wasser 134 bei einem Druck von ca. 5 mbar in dem Exsikkator 135 gelagert. Nach Aufhebung des Vakuums wird das Faser-Polymerharzmaterial mit Porenstruktur 124 beispielsweise für weitere 150 min oder mehr unter Wasser 134 gelagert, bevor der Faser-Polymerharzmaterial mit Porenstruktur 124 dem Exsikkator 135 entnommen wird und in einen wassergefüllten Behälter gelegt wird.

Der wassergefüllte Behälter wird für einen Temperschritt (Tempern 138) verschlossen und in einem Autoklav 126 positioniert.

In einem weiteren Autoklav-Verfahren wird ein Druck von ca. 15 bar aufgebaut und der Autoklav 126 nach Erreichen des Drucks, insbesondere bei maximaler Heizrate, auf ca. 160°C aufgeheizt. Die eingestellte Temperatur und der eingestellte Druck werden beispielsweise für ca. 6 h oder mehr beibehalten. Anschließend wird der Autoklav 126 (beispielsweise in ca. 20 min) auf ca. 25°C abgekühlt. Bis zur vollständigen Abkühlung auf Raumtemperatur wird der Druck bei ca. 15 bar gehalten.

Das Tempern 138 kann alternativ auch in einem druckfesten Gesenk 128, welches mit Wasser gefüllt ist, in einem Ofen ohne Außendruck erfolgen.

Nach dem Tempern 138 wird das Wasser 134 entfernt (Abdampfen 140). Hierzu wird das Faserverbundmaterial 100 bei ca. 90°C in einem Temperofen getrocknet. Das Abdampfen 140 wird so lange durchgeführt bis das poröse Faserverbundmaterial 100 eine konstante Masse aufweist.

Das Faserverbundmaterial eignet sich zur Verwendung als Thermalschutzmaterial.

Nachfolgend sind beispielhaft Verhältnisse von Phenolharz 110, Isopropanol 114 und Urotropin 118 angegeben. Die zuvor angeführten Anteile sind in der Tabelle als Beispiel 1 angeben. Die Anteile der Beispiele 1 bis 5 eignen sich im Zusammenhang mit dem zuvor beschriebenen Verfahren.

| Beispiel Nr. | Anteil Phenolharz [Gew.-%] | Anteil Isopropanol [Gew.-%] | Anteil Urotropin [Gew.-%] |
|---|---|---|---|
| 1 | 50 | 50 | 1 |
| 2 | 40 | 60 | 0,4 |
| 3 | 60 | 40 | 10 |
| 4 | 45 | 55 | 3 |
| 5 | 55 | 45 | 6 |

Die verschiedenen Anteile in der vorstehenden Tabelle sind jeweils in Gew.-%. Der Anteil an Phenolharz 110 und der Anteil an Isopropanol 114 beziehen sich jeweils auf eine Gesamtmasse aus Phenolharz 110 und Isopropanol 114. Der Anteil an Urotropin 118 bezieht sich auf die Masse des eingesetzten Phenolharzes 110.

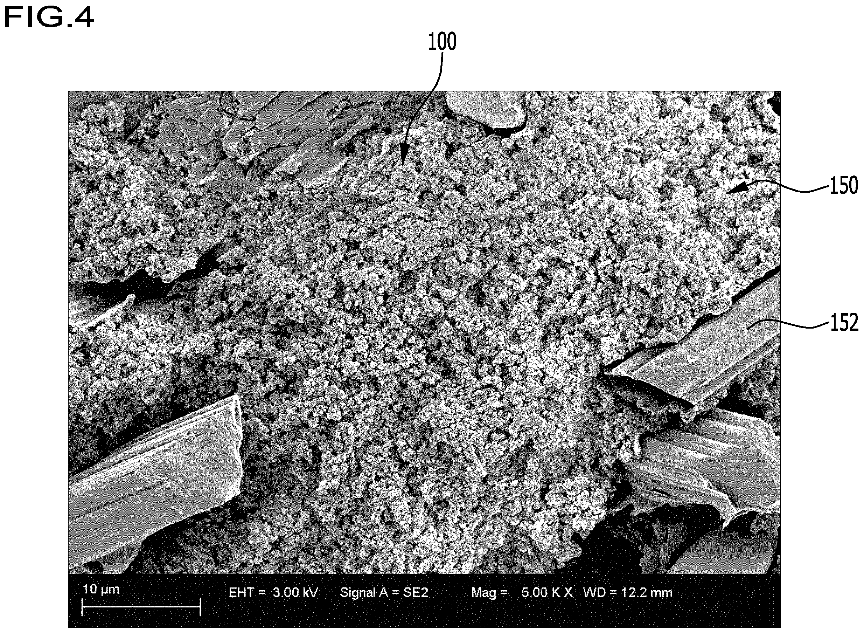

Ein nach dem im Zusammenhang mit Fig. 1 beschriebenen Verfahren hergestelltes poröses Faserverbundmaterial 100 ist insbesondere in den in Fig. 4 bis 6 dargestellten Elektronenmikroskopieaufnahmen zu sehen. Die Aufnahmen sind mit einem Rasterelektronenmikroskop gemacht, wobei ein Sekundärelektronendetektor benutzt wurde.

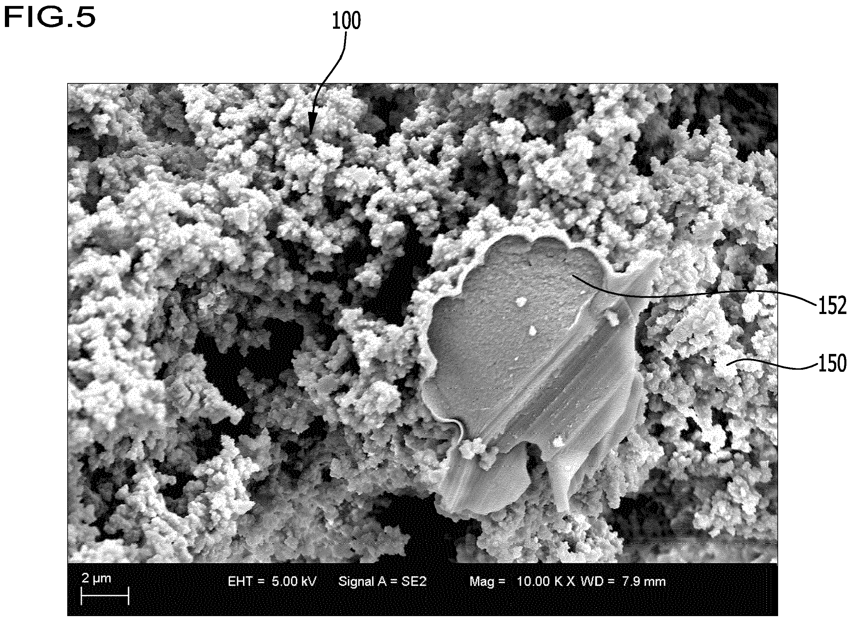

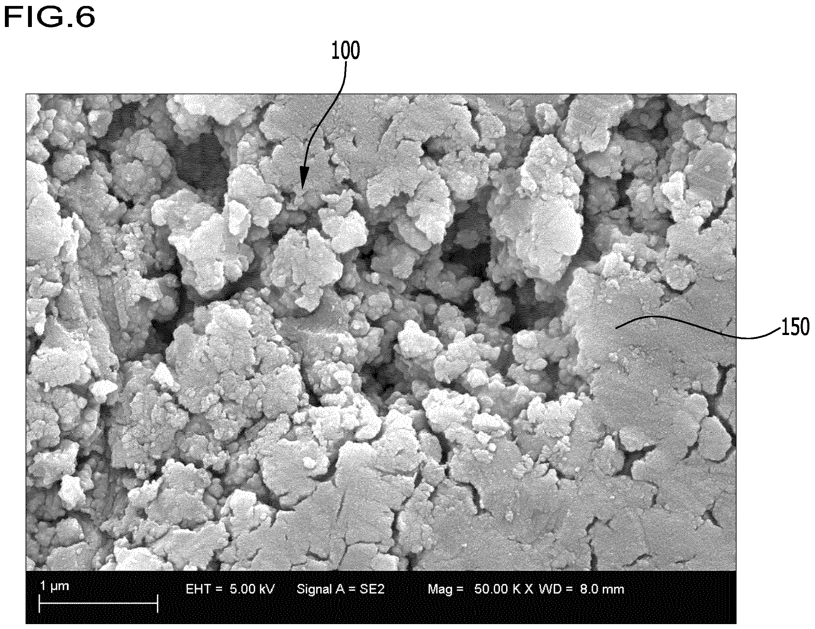

Bei der Elektronenmikroskopieaufnahme in Fig. 4 wurde eine Vergrößerung von 5.000 gewählt. In der Elektronenmikroskopieaufnahme in Fig. 5 ist die Vergrößerung 10.000 und in der Elektronenmikroskopieaufnahme in Fig. 6 ist die Vergrößerung 50.000.

In Ausführungsformen, in welchen das Fasergebilde 102 Phenolharzfasern umfasst oder daraus gebildet ist, werden die Phenolharzfasern unter Hitzeeinwirkung, insbesondere in einem Bereich von ca. 400°C bis ca. 3000°C, zu Kohlenstofffasern umgewandelt. Es entsteht insbesondere ein poröses Faserverbundmaterial 100, welches Kohlenstofffasern umfasst.

Insbesondere werden die Phenolharzfasern zu porösen Kohlenstofffasern umgesetzt.

Eine Faserstruktur und/oder Gesamtstruktur des Faserverbundmaterials bleibt dabei erhalten.

Beispielsweise findet eine Hitzeeinwirkung bei einem Wiedereintritt in die Erdatmosphäre statt.

Vorzugsweise wird bei der Hitzeeinwirkung auf ein poröses Faserverbundmaterial 100, welches Phenolharzfasern umfasst, ein vergleichsweise dünner Char-Layer an der Oberfläche gebildet.

Beispielsweise liegt ein Verhältnis einer Dicke des Faserverbundmaterials 100 insgesamt (virgin Material) und einer Dicke des Char-Layers bei 4:1 oder mehr, insbesondere bei 4,5:1 oder mehr.

Insbesondere liegt das Verhältnis der Dicke des Faserverbundmaterials 100 insgesamt (virgin Material) und der Dicke des Char-Layers bei 5:1 oder weniger, insbesondere bei 4,6:1 oder weniger.

Das poröse Faserverbundmaterial 100 mit Phenolharzfasern weist in einer Dickenrichtung vorzugsweise eine um einen Faktor 5 oder mehr, insbesondere eine um einen Faktor 6 oder mehr, verringerte Wärmeleitfähigkeit auf, verglichen mit einem Faserverbundmaterial 100 mit Kohlenstofffasern anstelle der Phenolharzfasern. Hierdurch ist insbesondere eine optimierte Thermalschutzwirkung ausgebildet.

Die Dickenrichtung ist vorzugsweise senkrecht zu einer äußeren Oberfläche des Faserverbundmaterials 100 definiert.

Beispielsweise liegt eine Wärmeleitfähigkeit des Faserverbundmaterials 100 mit Phenolharzfasern in Dickenrichtung bei 0,0423 W/(m·K).

Eine Wärmeleitfähigkeit des Faserverbundmaterials 100 mit Kohlenstofffasern in Dickenrichtung liegt vorzugsweise bei 0,256 W/(m·K).

Durch die Umsetzung der Phenolharzfasern zu Kohlenstofffasern bei Hitzeeinwirkung kommt es vorzugsweise zu einer Energieumsetzung, welche eine Hitzeschutzwirkung des Faserverbundmaterials 100 insgesamt insbesondere verstärken kann.

Wie insbesondere in Fig. 4 zu sehen ist, sind Strukturen 150 aus dem ausgehärteten Phenolharz 110 netzartig mit Zwischenräumen dazwischen. Kohlenstofffasern 152 sind darin eingebettet. Das ausgehärtete Phenolharz 110 weist vorzugsweise eine vernetzte schwammartige Struktur auf.

Wie insbesondere in Fig.5 zu sehen ist, weisen die Strukturen 150 des porösen Faserverbundmaterials 100 einen Durchmesser von 0,1 µm oder weniger auf.

In Fig. 6 ist insbesondere zu sehen, dass die Strukturen 150 ungeordnet sind und Zwischenräume dazwischen höhlenartige Strukturen sind. Es sind keine geordneten Kanäle ausgebildet.

### Bezugszeichenliste

- 100: Faserverbundmaterial
- 102: Fasergebilde
- 103: Kohlenstofffasergebilde
- 104: Gemisch
- 106: Infiltrieren
- 108: Polymerharz
- 110: Phenolharz
- 112: organisches Lösungsmittel
- 114: Isopropanol
- 116: Formaldehydbildner
- 118: Urotropin
- 120: Behälter
- 122: Aushärten
- 124: Faser-Polymerharzmaterial mit Porenstruktur
- 126: Autoklav
- 128: Gesenk
- 130: Membran
- 132: Entfernen
- 134: Wasser
- 135: Exsikkator
- 136: Infiltrieren
- 138: Tempern
- 140: Abdampfen
- 144: Thermalschutzmaterial
- 150: Strukturen
- 152: Kohlenstofffasern

## Patentansprüche

1. Verfahren zur Herstellung eines porösen Faserverbundmaterials (100), wobei das Verfahren umfasst:
- Bereitstellen eines Fasergebildes (102), welches mit einem flüssigen Gemisch, umfassend ein Polymerharz (108), ein organisches Lösungsmittel (112), insbesondere Isopropanol (114), und einen Formaldehydbildner (116), infiltriert ist oder wird;
- Aushärten (122) des flüssigen Gemischs (104) unter Ausbildung eines Faser-Polymerharzmaterials mit Porenstruktur (124);
- Infiltrieren (106) des Faser-Polymerharzmaterials mit Porenstruktur (124) mit Wasser (134); und
- Tempern (138) des mit Wasser (134) infiltrierten Faser-Polymerharzmaterials mit Porenstruktur (124).

2. Verfahren nach Anspruch 1, **dadurch gekennzeichnet, dass** der Formaldehydbildner (116) Urotropin (118) umfasst oder Urotropin ist.

3. Verfahren nach einem der vorangehenden Ansprüche, **dadurch gekennzeichnet, dass** das Aushärten (122) durch Erwärmen des flüssigen Gemischs (104) in einem druckfest verschlossenen Gesenk (128) und/oder Erwärmen des flüssigen Gemischs (104) unter externer Beaufschlagung des flüssigen Gemischs (104) mit Druck, insbesondere in einem Autoklav (126), durchgeführt wird.

4. Verfahren nach einem der vorangehenden Ansprüche, **dadurch gekennzeichnet, dass** das Aushärten (122) bei einer Temperatur von ca. 120°C bis ca. 160°C, vorzugsweise ca. 140°C bis ca. 150°C, insbesondere ca. 145°C, durchgeführt wird.

5. Verfahren nach einem der vorangehenden Ansprüche, **dadurch gekennzeichnet, dass** ein Anteil an Formaldehydbildner (116) in einem Bereich von ca. 0,4 Gew.-% bis ca. 10,0 Gew.-%, vorzugsweise in einem Bereich von ca. 0,5 Gew.-% bis ca. 1,5 Gew.-%, insbesondere in einem Bereich von ca. 0,8 Gew.-% bis ca. 1,2 Gew.-%, bezogen auf eine Masse des eingesetzten Polymerharzes (108) liegt.

6. Verfahren nach einem der vorangehenden Ansprüche, **dadurch gekennzeichnet, dass** das Polymerharz (108) und das organische Lösungsmittel (112) in dem flüssigen Gemisch (104), insbesondere vor Zugabe des Formaldehydbildners (116), in einem Verhältnis von Masse des Polymerharzes (108) zu Masse des organischen Lösungsmittels (112) von ca. 2 zu 3 bis ca. 3 zu 2, insbesondere von ca. 1 zu 1, vorliegen.

7. Verfahren nach einem der vorangehenden Ansprüche, **dadurch gekennzeichnet, dass** das Polymerharz (108) ein Phenolharz (110) oder ein Epoxidharz ist.

8. Verfahren nach einem der vorangehenden Ansprüche, **dadurch gekennzeichnet, dass** das Fasergebilde (102) Phenolharzfasern umfasst oder daraus gebildet ist.

9. Verfahren nach einem der vorangehenden Ansprüche, **dadurch gekennzeichnet, dass** das organische Lösungsmittel (112) vor dem Infiltrieren (106) des Faser-Polymerharzmaterials mit Porenstruktur (124) mit Wasser (134) entfernt wird, vorzugsweise mittels Erwärmen des Faser-Polymerharzmaterials mit Porenstruktur (124), insbesondere bei ca. 80°C bis ca. 100°C, beispielsweise bei ca. 80°C.

10. Verfahren nach einem der vorangehenden Ansprüche, **dadurch gekennzeichnet, dass** während des Temperns (138) eine Reaktion zur Bildung eines porösen Netzwerks vollständig oder bis zu einem Reaktionsabbruch abläuft, wobei Strukturen (150) des porösen Netzwerks einen mittleren Durchmesser von ca. 500 nm oder weniger, vorzugsweise ca. 300 nm oder weniger, insbesondere ca. 150 nm oder weniger, aufweisen.

11. Verfahren nach einem der vorangehenden Ansprüche, **gekennzeichnet durch** mindestens eines der Folgenden:
- nach dem Tempern (138) wird das Wasser (134) mittels Erwärmen in einem Bereich von ca. 80°C bis ca. 100°C, vorzugsweise ca. 90°C, abgedampft;
- das Aushärten (122) wird unter einem Druck von ca. 10 bar bis ca. 20 bar, vorzugsweise ca. 15 bar, durchgeführt;
- das Infiltrieren (106) des Fasergebildes (102) wird unter Vakuumbeaufschlagung, vorzugsweise unter Anlegung eines Unterdrucks von ca. 180 mbar bis ca. 220 mbar, insbesondere ca. 200 mbar, an einen das Fasergebilde (102) enthaltenden Behälter (120), durchgeführt.

12. Verfahren nach einem der vorangehenden Ansprüche, **dadurch gekennzeichnet, dass** das Infiltrieren (106) des Faser-Polymerharzmaterials mit Porenstruktur (124) mit Wasser (134) unter Vakuumbeaufschlagung, vorzugsweise unter Anlegung eines Unterdrucks von ca. 2 mbar bis ca. 200 mbar, insbesondere von ca. 2 mbar bis ca. 10 mbar, beispielsweise ca. 5 mbar, an einen das Faser-Polymerharzmaterial mit Porenstruktur (124) enthaltenden Behälter (120), durchgeführt wird.

13. Faserverbundmaterial (100), hergestellt nach einem Verfahren nach einem der Ansprüche 1 bis 12.

14. Faserverbundmaterial (100) nach Anspruch 13, **dadurch gekennzeichnet, dass** das Fasermaterial (100) Phenolharzfasern umfasst, welche insbesondere bei Hitzeeinwirkung unter Erhalt einer Faserstruktur zu Kohlenstofffasern (152) umsetzbar sind und/oder umgesetzt werden.

15. Verwendung eines Faserverbundmaterials (100) nach Anspruch 13 oder 14 als Thermalschutzmaterial (144).

## Claims

1. A method for the manufacture of a porous fibre composite material (100), wherein the method comprises:
- Providing a fibre structure (102), which is infiltrated with a liquid mixture, comprising a polymer resin (108), an organic solvent (112), in particular isopropanol (114), and a formaldehyde former (116);
- Curing (122) of the liquid mixture (104) with the formation of a fibre/polymer resin material with a porous structure (124);
- Infiltration (106) with water (134) of the fibre/polymer resin material with the porous structure (124); and
- Tempering (138) the fibre/polymer resin material with the porous structure (124) and infiltrated with water (134).

2. A method according to claim 1, **characterised in that** the formaldehyde former (116) comprises Urotropin (118) or is Urotropin.

3. A method according to one of the preceding claims, **characterised in that** the curing (122) is carried out by warming the liquid mixture (104) in a pressure-tight closed cavity (128) and/or heating of the liquid mixture (104) with external application of pressure to the liquid mixture (104), especially in a autoclave (126).

4. A method according to one of the preceding claims, **characterised in that** the curing (122) is carried out at a temperature from approx. 120°C to approx. 160°C, preferably approx. 140°C to approx. 150°C, in particular approx. 145°C.

5. A method according to one of the preceding claims, **characterised in that** a proportion of the formaldehyde former (116) lies in a range of approx. 0.4 weight-% to approx. 10.0 weight-%, preferably in a range of approx. 0.5 weight-% to approx. 1.5 weight-%, in particular in a range of approx. 0.8 weight-% to approx. 1.2 weight-%, with reference to a mass of the polymer resin (108) used.

6. A method according to one of the preceding claims, **characterised in** the polymer resin (108) and the organic solvent (112) in the liquid mixture (104), in particular before addition of the formaldehyde former (116), are present in a ratio of mass of the polymer resin (108) to the mass of the organic solvent (112) of approx. 2 to 3 up to 3 to 2, in particular of approx. 1 to 1.

7. A method according to one of the preceding claims, **characterised in that** the polymer resin (108) is phenol resin (110) or an epoxy resin.

8. A method according to one of the preceding claims, **characterised in that** the fibre structure (102) comprises phenol resin fibres or is formed thereof.

9. A method according to one of the preceding claims, **characterised in that** water (134) is removed from the organic solvent (112) before the infiltration (106) of the fibre/polymer resin material with the porous structure (124), preferably by means of heating the fibre/polymer resin material with the porous structure (124), in particular at approx. 80°C to 100°C, for example at approx. 80°C.

10. A method according to one of the preceding claims, **characterised in that** during the tempering (138) there proceeds a reaction for the formation of a porous network completely or up to a termination of the reaction, wherein structures (150) of the porous network have an average diameter of approx. 500 nm or less, preferably approx. 300 nm or less, in particular approx. 150 nm or less.

11. A method according to one of the preceding claims, **characterised by** at least one of the following:
- after the tempering (138) the water (134) is evaporated by heating in a range of approx. 80°C to approx. 100°C, preferably approx. 90°C;
- the curing (122) is carried out under a pressure of approx. 10 bar to approx. 20 bar, preferably approx. 15 bar;
- the infiltration (106) of the fibre structure (102) is carried out with exposure to a vacuum, preferably with the application of an underpressure of approx. 180 mbar to approx. 220 mbar, in particular approx. 200 mbar, to a container (120) containing the fibre structure (102).

12. A method according to one of the preceding claims, **characterised in that** the infiltration (106) of the fibre/polymer resin material with the porous structure (124) with water (134) is carried out with exposure to a vacuum, preferably with the application of an underpressure of approx. 2 mbar to approx. 20 mbar, in particular from approx. 2 mbar to approx. 10 mbar, for example approx. 5 mbar, to a container (120) containing the fibre/polymer resin material with the porous structure (124).

13. A fibre composite material (100), manufactured according to a method according to one of claims 1 to 12.

14. A fibre composite material (100) according to claim 13, **characterised in that** the fibre material (100) comprises phenol resin fibres, which are convertible and/or converted to carbon fibres (152) in particular under the action of heat while receiving a fibre structure.

15. Use of a fibre composite material (100) according to claim 13 or 14 as a thermal protection material (144).

## Revendications

1. Procédé de fabrication d'un matériau composite fibreux (100) poreux, dans lequel le procédé comprend :
- la mise à disposition d'une structure fibreuse (102), laquelle est infiltrée avec un mélange liquide comprenant une résine polymère (108), un solvant organique (112), en particulier de l'isopropanol (114), et un agent de formation de formaldéhyde (116) ;
- le durcissement (122) du mélange liquide (104) en réalisant un matériau de résine polymère à base de fibres avec une structure poreuse (124) ;
- l'infiltration (106) du matériau de résine polymère à base de fibres avec une structure poreuse (124) avec de l'eau (134) ; et
- le recuit (138) du matériau de résine polymère à base de fibres avec une structure poreuse (124) infiltrée avec de l'eau (134).

2. Procédé selon la revendication 1, **caractérisé en ce que** l'agent de formation de formaldéhyde (116) comprend de l'urotropine (118) ou est de l'urotropine.

3. Procédé selon l'une quelconque des revendications précédentes, **caractérisé en ce que** le durcissement (122) est effectué en chauffant le mélange liquide (104) dans une matrice (128) fermée de manière résistante à la pression et/ou en chauffant le mélange liquide (104) en soumettant de manière externe le mélange liquide (104) à l'action d'une pression, en particulier dans un autoclave (126).

4. Procédé selon l'une quelconque des revendications précédentes, **caractérisé en ce que** le durcissement (122) est effectué à une température d'environ 120 °C à environ 160 °C, de préférence d'environ 140 °C à environ 150 °C, en particulier d'environ 145 °C.

5. Procédé selon l'une quelconque des revendications précédentes, **caractérisé en ce qu'**une proportion en agent de formation de formaldéhyde (116) se situe dans une plage d'environ 0,4 % en poids à environ 10,0 % en poids, de préférence dans une plage d'environ 0,5 % en poids à environ 1,5 % en poids, en particulier dans une plage d'environ 0,8 % en poids à environ 1,2 % en poids, par rapport à une masse de la résine de polymère (108) employée.

6. Procédé selon l'une quelconque des revendications précédentes, **caractérisé en ce que** la résine polymère (108) et le solvant organique (112) sont présents dans le mélange liquide (104), en particulier avant l'ajout de l'agent de formation de formaldéhyde (116), selon un rapport de poids de la résine polymère (108) par rapport au poids du solvant organique (112) d'environ 2:3 à 3:2, en particulier d'environ 1:1.

7. Procédé selon l'une quelconque des revendications précédentes, **caractérisé en ce que** la résine de polymère (108) est une résine phénolique (110) ou une résine époxyde.

8. Procédé selon l'une quelconque des revendications précédentes, **caractérisé en ce que** la structure de fibres (102) comprend des fibres de résine phénolique ou en est formée.

9. Procédé selon l'une quelconque des revendications précédentes, **caractérisé en ce que** le solvant organique (112) est retiré avant l'infiltration (106) du matériau de résine polymère à base de fibres avec une structure poreuse (124) avec de l'eau (134), de préférence au moyen d'un chauffage du matériau de résine polymère à base de fibres avec une structure poreuse (124), en particulier de l'ordre d'environ 80 °C à environ 100 °C, par exemple de l'ordre d'environ 80 °C.

10. Procédé selon l'une quelconque des revendications précédentes, **caractérisé en ce que** pendant le recuit (138), une réaction pour former un réseau poreux se déroule complètement ou jusqu'à une interruption de réaction, dans lequel des structures (150) du réseau poreux présentent un diamètre moyen d'environ 500 nm ou moins, de préférence d'environ 300 nm ou moins, en particulier d'environ 150 nm ou moins.

11. Procédé selon l'une quelconque des revendications précédentes, **caractérisé par** au moins une des étapes suivantes :
- après le recuit (138), l'eau (134) est évaporée au moyen d'un chauffage dans une plage d'environ 80 °C à environ 100 °C, de préférence d'environ 90 °C ;
- le durcissement (122) est effectué à une pression d'environ 10 bar à environ 20 bar, de préférence d'environ 15 bar ;
- l'infiltration (106) de la structure fibreuse (102) est effectuée sous l'action de vide, de préférence en appliquant une dépression d'environ 180 mbar à environ 220 mbar, en particulier d'environ 200 mbar, sur un contenant (120) contenant la structure fibreuse (102).

12. Procédé selon l'une quelconque des revendications précédentes, **caractérisé en ce que** l'infiltration (106) du matériau de résine polymère à base de fibres avec une structure poreuse (124) avec de l'eau (134) est effectuée sous l'action d'un vide, de préférence en appliquant une dépression d'environ 2 mbar à environ 200 mbar, en particulier d'environ 2 mbar à environ 10 mbar, par exemple d'environ 5 mbar, sur un contenant (120) contenant le matériau de résine polymère à base de fibres avec une structure poreuse (124).

13. Matériau composite fibreux (100) fabriqué selon un procédé selon l'une quelconque des revendications 1 à 12.

14. Matériau composite fibreux (100) selon la revendication 13, **caractérisé en ce que** le matériau fibreux (100) comprend des fibres de résine phénolique, lesquelles peuvent être transformées et/ou sont transformées en des fibres de carbone (152) en particulier sous l'effet de la chaleur en obtenant une structure fibreuse.

15. Utilisation d'un matériau composite fibreux (100) selon la revendication 13 ou 14 en tant que matériau de protection thermique (144).
